(19) Europäisches Patentamt
European Patent Office
Office européen des brevets

(11) **EP 4 265 308 A1**

(12) **EUROPEAN PATENT APPLICATION**

(43) Date of publication:
**25.10.2023 Bulletin 2023/43**

(21) Application number: **23163490.8**

(22) Date of filing: **22.03.2023**

(51) International Patent Classification (IPC):
**A63F 13/71** (2014.01)    **A63F 13/213** (2014.01)
**A63F 13/655** (2014.01)    **G06V 40/16** (2022.01)

(52) Cooperative Patent Classification (CPC):
**A63F 13/71; A63F 13/213; A63F 13/655;
G06V 40/172**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.04.2022  GB 202205703**

(71) Applicant: **Sony Interactive Entertainment Inc.
Tokyo 108-0075 (JP)**

(72) Inventors:
* **MONTI, Maria
  London, W1F 7LP (GB)**
* **WERLE, Michael
  London, W1F 7LP (GB)**
* **HUME, Oliver
  London, W1F 7LP (GB)**

(74) Representative: **D Young & Co LLP
120 Holborn
London EC1N 2DY (GB)**

(54) **IMAGE PROCESSING APPARATUS AND METHOD**

(57)    An image processing apparatus, comprising: an input unit configured to receive one or more images of a face of a user and one or more images of a face of a virtual avatar; a determining unit configured to determine, based on one or more of the images of the face of the user and one or more of the images of the face of the virtual avatar, a match score indicating a degree of resemblance between the face of the user and the face of the virtual avatar; an evaluation unit configured to evaluate whether the determined match score meets or exceeds a first threshold match score; and an output unit configured to output, for display, a virtual element associated with the virtual avatar that is responsive to whether the determined match score meets or exceeds the first threshold match score.

FIG. 2

## Description

Field of Invention

The present invention relates to an image processing apparatus and method.

Background

The popularity of multi-player video games has increased in recent years. Such multi-player video games allow users to connect with other users while completing certain achievements or challenges within the video game. For example, in order to complete certain achievements or challenges within a multi-player video game, two or more users may need to co-operate with each other. For example, the two or more users may need to help each other in order to overcome a certain obstacle or defeat a mutual enemy. In other examples, completing certain achievements or challenges may require the two or more users to compete with each other. For example, the two or more users may be split into two or more teams, and the challenge is to obtain more points, kills, goals, etc. than the other team.

While playing a multi-player video game, users may communicate with each other either to discuss strategies for completing a certain achievement or challenge, or for social interaction and camaraderie. Indeed, certain multi-player video games even place an emphasis on social interaction and camaraderie between users. However, even though socially-oriented gaming experiences can be beneficial for users' well-being, such experiences are susceptible to being exploited by individuals who use them for malicious purposes.

The present invention seeks to alleviate or mitigate this issue.

Summary of the Invention

In a first aspect, an image processing apparatus is provided in claim 1.

In another aspect, an image processing method is provided in claim 14.

Further respective aspects and features of the invention are defined in the appended claims.

Embodiments of the present invention will now be described by way of example with reference to the accompanying drawings, in which:

- Figure 1 schematically illustrates an entertainment system operable as an image processing apparatus according to embodiments of the present description;
- Figure 2 schematically illustrates an image processing apparatus according to embodiments of the present description;
- Figure 3 schematically illustrates an image processing apparatus according to embodiments of the present description;
- Figure 4 schematically illustrates an image processing apparatus according to embodiments of the present description;
- Figure 5 schematically illustrates an image processing method according to embodiments of the present description;
- Figure 6 schematically illustrates an image processing method according to embodiments of the present description; and
- Figure 7 schematically illustrates an image processing method according to embodiments of the present description.

Description of the Embodiments

An image processing apparatus and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, an entertainment system is a non-limiting example of such an image processing apparatus.

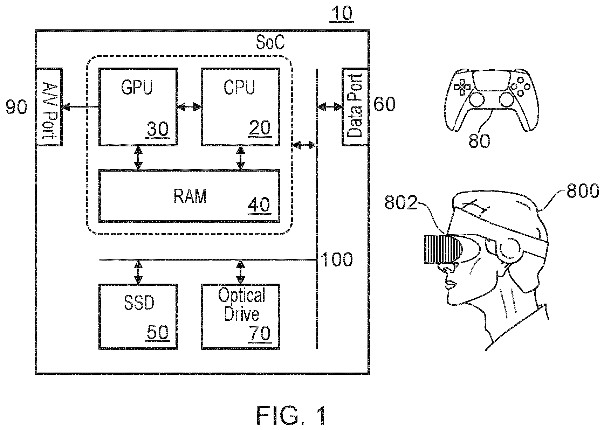

Referring to Figure 1, an example of an entertainment system 10 is a computer or console such as the Sony ® PlayStation 5 ® (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet ® port, WiFi ® port, Bluetooth ® port or similar, as appropriate. It may also optionally receive data via an optical drive 70.

Interaction with the system is typically provided using one or more handheld controllers 80, such as the DualSense ® controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 802, worn by a user 800.

Socially-oriented aspects of multi-player games typically involve the use of virtual avatars. A virtual avatar is a virtual representation of a user, and is typically located within a virtual environment of a video game. Moreover, the appearance of the virtual avatar is typically edited by the user, and the actions and movements of the virtual avatar are typically controlled by the user. A plurality of virtual avatars may share the same virtual environment, each virtual avatar being controlled by their respective user. As a non-limiting example of social interaction between users using virtual avatars, a first user may control their virtual avatar such that their virtual avatar moves to a location which is within a threshold distance from a second user's virtual avatar. Consequently, the first and second users may be permitted to engage in social interaction using a communication method such as Voice over Internet Protocol (VoIP), or Instant Messaging (IM), for example.

As previously mentioned, virtual avatars are virtual representations of users. As such, users typically identify certain other users by identifying the other users' respective virtual avatars. For example, a first user may wish to socially interact with a second user, this second user being, say, the first user's friend, a celebrity, a well-known video game streamer, or the like. In order for the first and second users to socially interact using virtual avatars, the first user will need to firstly identify the second user's virtual avatar within the virtual environment. If the appearance of the second user's virtual avatar resembles the real-world appearance of the user, the first user will be more able to identify the second user's virtual avatar.

Therefore, as will be readily appreciated by persons skilled in the art, in socially-oriented aspects of multi-player video games, users may rely on the appearance of other users' virtual avatars located within the virtual environment as a way of identifying other users. Such reliance on the appearance of virtual avatars for user identification may be exploited by certain users who seek to use socially-oriented aspects of multi-player games for malicious purposes. As a non-limiting example, a certain malicious user may wish to use socially-oriented gaming experiences to defraud other users. This malicious user may do so by, say, editing the appearance of their virtual avatar such that it strongly resembles a well-known video game streamer. Other users, seeing the malicious user's virtual avatar, may consequently attempt to engage in social interaction with the malicious user in the assumption that the malicious user is actually the well-known video game streamer. The malicious user may then engage in social interaction with the other users by using, say, IM, and subsequently attempt to defraud the others users by, say, convincing the other users that the well-known video game streamer with whom they believe they are talking is facing some financial hardship and requires financial help, for example.

*Image processing apparatus*

The aforementioned problem of users exploiting socially-oriented aspects of multi-player video games for malicious purposes can be mitigated or alleviated by implementing means to verify the appearance of a user's virtual avatar based on a comparison of the appearance of the user's virtual avatar with the real-world appearance of the user, and means to display, within the virtual environment, an indication of the results of this verification. Such means provide users with an indication as to whether they should rely on the appearance of another user's virtual avatar as a way of identifying the other user.

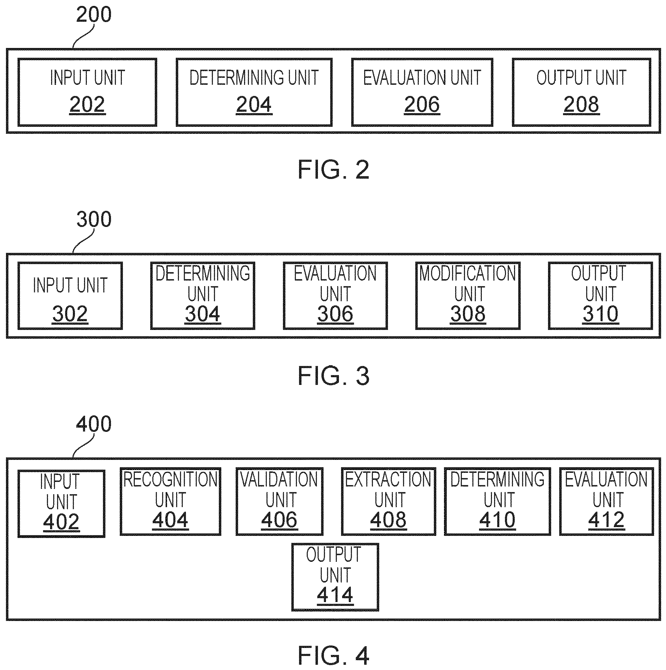

Accordingly, turning now to figure 2, in embodiments of the present description, an image processing apparatus 200 comprises an input unit 202 configured to receive one or more images of a face of a user and one or more images of a face of a first virtual avatar; a determining unit 204 configured to determine, based on one or more of the images of the face of the user and one or more of the images of the face of the first virtual avatar, a match score indicating a degree of resemblance between the face of the user and the face of the first virtual avatar; an evaluation unit 206 configured to evaluate whether the determined match score meets or exceeds a first threshold match score; and an output unit 208 configured to output, for display, a virtual element associated with the first virtual avatar that is responsive to whether the determined match score meets or exceeds the first threshold match score.

As previously mentioned, in embodiments of the present description, image processing apparatus 200 may be an entertainment device 10 such as a computer, a video game console, or the like.

Embodiments of the present description improve the safety of users who are participating in socially-oriented aspects of multi-player video games. As a non-limiting example, a first user (or another user) may have edited the appearance of the first user's virtual avatar such that it strongly resembles the real-world appearance of the first user. Subsequently, images of the first user's face and the face of the first user's virtual avatar may be input into image processing apparatus 200 via input unit 202, and determining unit 204 may, for example, compare the facial features of the first user and the first user's virtual avatar depicted within the images. Based on this comparison of facial features, determining unit 204 may determine a match score, this match score being an indication of how strongly the face of the first user's virtual avatar resembles that of the first user. For example, determining unit 204 may determine a match score of, say, 90% (where a match score of 100% indicates that the faces of the user and virtual avatar are identical). Evaluation unit 206 subsequently evaluates this determined match score of 90% against a threshold match score. This threshold match score may be, say, 80%, for example. Output unit 208 subsequently outputs, for display, a virtual element associated with the first user's virtual avatar, this virtual element being responsive to the evaluation carried out by evaluation unit 206. For example, in response to the determined match score exceeding the threshold match score, this virtual element may comprise an indication that the appearance of the first user's virtual avatar resembles the real-world appearance of the user. Thus, other users wishing to communicate with the first user may view the virtual element associated with the first user's virtual avatar, which indicates a strong resemblance between the first user's virtual avatar and the first user, and subsequently ascertain that they can rely on the appearance of the first user's virtual avatar as a way of identifying the first user.

Conversely, a first user (or another user) may have edited the appearance of the first user's virtual avatar such that it does not resemble the real-world appearance of the first user. Subsequently, images of the first user's face and the face of the first user's virtual avatar may be input into image processing apparatus 200 via input unit 202, determining unit 204 determines a match score of, say, 30%, evaluation unit 206 evaluates the determined match score against the threshold match score of 80%, and output unit 208 outputs a virtual element responsive to this evaluation. In response to the determined match score not meeting or exceeding the threshold match score, this virtual element may comprise an indication that the appearance of the first user's virtual avatar does not resemble the real-world appearance of the user, for example. Thus, other users wishing to communicate with the first user may view the virtual element associated with the first user's virtual avatar, which indicates that no resemblance exists between the first user's virtual avatar and the first user, and subsequently ascertain that they cannot rely on the appearance of the first user's virtual avatar as a way of identifying the first user. It will be appreciated that in a scheme were avatars that do not resemble their users are indicated in this manner, optionally avatars that do resemble their users may not require a visible virtual element associated with them to indicate this (or vice-versa).

Therefore, embodiments of the present description improve the safety of users who are participating in socially-oriented aspects of multi-player video games. This is because the virtual elements which are output for display provide users with indications as to whether they should rely on the appearance of other users' virtual avatar as a way of identifying the other users, thereby allowing users to make informed decisions as to whether it is safe for them to socially interact with the other users through the use of virtual avatars.

*Facial Images*

In embodiments of the present description, input unit 202 may be one or more data ports 60, such as USB ports, Ethernet ® ports, WiFi ® ports, Bluetooth ® ports, or the like.

In embodiments of the present description, input unit 202 is configured to receive one or more images of a face of a user and one or more images of a face of a first virtual avatar. The one or more images of the face of the user may comprise one or more images, wherein at least part of each image comprises the face of the user (for example, facing directly towards a camera, and/or optionally from other relative directions). Alternatively or in addition, the one or more images of the face of the user may comprise one or more images of an identity document of the user, such as a passport, a driving licence, a national identity card, or the like. Alternatively or in addition, the one or more images of the user's face may comprise one or more live images of the face of the user. Types of images of a user's face are discussed in more detail later herein.

The one or more images of the face of the first virtual avatar may be provided by the video game within whose virtual environment the first virtual avatar is located. The texture(s) associated with the face of the avatar are likely to be known by the game and so may be accessed for this purpose. Typically however textures are stored in a flat and distorted manner, and hence in order to compare them with the user, it may be necessary to apply the texture(s) to the avatar, and capture an image of the result as it would be seen by other users. Hence for example, the video game may comprise a so-called "photo mode", which allows users to capture one or more images of at least part of the video game's virtual environment while the video game is paused. This "photo mode" may be used to capture images of the face of the first virtual avatar. Alternatively or in addition the game may capture one or more renders to the avatar face (whether subsequently displayed or not) automatically whenever the avatar is selected or modified. Alternatively or in addition, the video game may comprise a so-called "character creator mode", which allows users to edit the appearance of their virtual avatar. As a final stage of the "character creator mode", images of the face of the first virtual avatar may be captured once the user has finished editing the appearance of first virtual avatar. Alternatively or in addition, the "character creator mode" of the video game may generate an appearance of a virtual avatar based on one or more images supplied by the user. In any event, at least part of each of the one or more images of the face of the virtual avatar may comprise the face of the first virtual avatar (for example, facing directly towards a virtual camera, and/or optionally from other relative directions). The face of the first virtual avatar (as depicted within the one or more images of the first virtual avatar's face) may or may not recognisably correspond to the face of the user (as depicted within the one or more images of the user's face).

In any case, and as will be appreciated by persons skilled in the art, the one or more images of the user's face and/or the one or more images of the virtual avatar's face may comprise one or more "still" images (for example, one or more photographs) and/or one or more video frames (extracted from video data, for example).

*Match Score*

In embodiments of the present description, it is desirable for the degree of resemblance between the user's face and the first virtual avatar's face to be determined once the images of the user's face and the images of the first virtual avatar's face are received. As will be appreciated by persons skilled in the relevant art, in order to determine such a resemblance, one or more computer-implemented facial feature detection algorithms or similar may be used. Such facial feature detection algorithms would allow image processing apparatus 200 to detect at least some of the facial features of the user's face (and optionally at least some of the relationships between the user's facial features), and at least some of the facial features of the first virtual avatar's face (and optionally at least some of the relationships between the first virtual avatar's facial features). These detected facial features (and optional inter-feature relationships) can be subsequently compared in order to determine the degree of resemblance between the user's face and the first virtual avatar's face. It will be appreciated that not all facial features or inter-feature relationships may be required for the purposes of comparison.

Therefore, in embodiments of the present description, determining unit 204 (which may be one or more CPUs 20 and/or one or more GPUs 30) is configured to determine, based on the one or more images of the face of the user and the one or more images of the face of the first virtual avatar, a match score indicating a degree of resemblance between the face of the user and the face of the first virtual avatar.

As previously mentioned, determining the match score (that is, the degree of resemblance between the face of the user and the face of the first virtual avatar) may be achieved through the use of facial feature detection algorithms. As such, determining unit 204 may be configured (for example, using suitable software instruction) to detect one or more facial features (and optionally, detect one or more relationships between detected facial features) using one or more facial feature detection algorithms (or components thereof) as required. For example, determining unit 204 may be configured to detect one or more facial features of the face of the user from the one or more images of the face of the user, detect one or more facial features of the face of the first virtual avatar from the one or more images of the face of the first virtual avatar, and compare one or more of the detected facial features of the face of the user with one or more of the detected facial features of the face of the first virtual avatar. Optionally, determining unit 204 may be configured to detect one or more relationships between two or more of the detected facial features of the face of the user, detect one or more relationships between two or more of the detected facial features of the face of the first virtual avatar, and compare one or more of the detected relationships between detected facial features of the face of the user with one or more of the detected relationships between detected facial features of the face of the first virtual avatar.

The term "facial feature detection algorithm" refers to any suitable computer-implemented method, software, algorithm, or the like, which causes a computer (such as image processing 200) to detect facial features (and optionally, inter-feature relationships) from images of a face. Such facial feature detection algorithms are well-known in the art. Examples of such algorithms include eigenfaces, eigenfeatures, fisherfaces, or the like. Moreover, machine learning and methods, neural networks, artificial intelligence, or the like may be used to detect facial features (and inter-feature relationships).

As a non-limiting example of using a facial feature detection algorithm, an image of a user's face and an image of a virtual avatar's are input to image processing apparatus 200 via input unit 202. Subsequently, determining unit 204 detects one or more facial features of the user's face from the image of the user's face. These facial features may be, say, the user's eye(s), lip(s), nose, ear(s), or the like. Similarly, determining unit 204 detects one or more facial features of the virtual avatar's face from the image of the virtual avatar's face. Subsequently, determining unit 204 compares the detected facial features of the user with that of the virtual avatar. For example, the determining unit 204 may compare, say, the nose of the user with the nose of the virtual avatar. In such case, determining unit 204 may compare aspects of the user's nose (such as the shape, size, skin colour, or the like) with that of the virtual avatar's nose. Alternatively or in addition, determining unit 204 may compare aspects (such as shape, size, colour, or the like) of one or more parts of the user's nose (such as the bridge, nostrils, septum, or the like) with that of the virtual avatar's nose.

Subsequently, determining unit 204 may determine a match score based on the comparison of user's facial features (or parts thereof) with those of the virtual avatar. Continuing with the example of noses, determining unit 204 may determine that the length of the user's nose (as depicted in the image of the user's face) is, say, 7 cm from bridge to philtrum, and the length of the virtual avatar's nose (as depicted in the image of the virtual avatar's face) is, say, 6.5 cm. Determining unit 204 may determine a match score based on these nose length measurements. As a non-limiting example, a percentage match score, $M$, may be determined from the user's nose length, $L_u$, and the virtual avatar's nose length, $L_{va}$, in the following manner:

$$M = 100\left(1 - \frac{|L_u - L_{va}|}{L_u}\right)$$

In this example, the match score provides an indication of the difference between the nose length of the user and the nose length of the virtual avatar, a match score of 100% indicating that the nose length of the virtual avatar is identical to that of the user. For $L_u$ = 7 cm and $L_{va}$ = 6.5 cm, a match score of $M$ = 92.9% may be determined by determining unit 204. As will be appreciated by persons skilled in the art, any number of facial feature comparisons may be factored into the calculation of the match score. Moreover, these comparisons are not limited to geometric aspects. As a non-limiting example, an overall percentage match score, $M_{TOTAL}$, may be determined in the following manner:

$$M_{TOTAL} = \frac{100\sum_{i=1}^{n} C_i\left(1 - \frac{|U_i - A_i|}{A_i}\right)}{n}$$

Where $U_i$ is the value of the $i^{th}$ aspect (such as shape, size, colour, or the like) of a facial feature (or part thereof) of the user's face, $A_i$ is the value of the corresponding aspect of the corresponding facial feature (or part thereof) of the virtual avatar's face, $C_i$ is a weighting coefficient corresponding to the $i^{th}$ facial feature aspect, and $n$ is the total number of facial feature aspects being used to determine the overall match score, $M_{TOTAL}$. As will be appreciated by persons skilled in the art, certain aspects of facial features may provide a more effective means of determining resemblance between facial features of the user and virtual avatar, and may thus be given more weight within the determination of the overall match score. For example, the length of the nose may be a more effective means of determining resemblance than, say, the length of the ear lobe, as the nose is typically less likely to be occluded by any headwear that the user may be wearing in the image, for example. In such case, the value of the weighting coefficient corresponding to measurements of nose length may be made greater than that corresponding to measurements of the ear lobe length.

As will be appreciated by persons skilled in the art, in order to compare geometric aspects (such as shape, size, and the like) of facial features (or parts thereof), the images of the user's face and/or the images of the virtual avatar's face (or at least the part of the image comprising the at least part of the facial feature to be compared) may need to be adjusted such that a representative length scale of the user's facial feature is at least approximately equal to that of the virtual avatar's facial feature. As a non-limiting example, the height and/or width of the image of the virtual avatar's face may be adjusted such that the width of the bridge of the virtual avatar's nose is approximately equal to the width of the bridge of the user's nose, as depicted in the image of the user's face. Moreover, as will be appreciated by persons skilled in the art, in order to compare colours of facial features, the colour values of the pixels within the images of the user's face and images of the virtual avatar's face corresponding to the facial features (or parts thereof) to be compared may be required. As a non-limiting example, the colour values (such as RGB values, brightness, saturation, or the like) of one or more pixels within the image of the user's face corresponding to the centre of the bridge of the user's nose may be determined and compared with that of the image of the virtual avatar's face.

Optionally, determining unit 204 may detect one or more relationships between two or more of the detected facial features of the user's face. These inter-feature relationships may be, say, a distance between detected facial features, a relative positon or orientation of a first facial feature with respect to a second facial feature, a relative size of a first facial feature with respect to a second facial feature, or the like. Similarly, determining unit 204 may detect one or more relationships between two or more of the detected facial features of the virtual avatar's face. These relationships may subsequently be compared in a similar manner to that of the facial feature aspects described previously in order to determine at least part of a match score.

*Threshold(s)*

In embodiments of the present description, it is desirable to provide other users with an indication as to whether they should rely on the appearance of the first virtual avatar as a way of identifying the user. As will be appreciated by persons skilled in the art, the match score previously described serves as a quantitative measure of the resemblance between the user and first virtual avatar. As such, the match score may be utilised by image processing apparatus 200 in order to evaluate whether the first virtual avatar's appearance can in fact be relied upon by others users to identify the user before providing users with an indication of such.

Therefore, in embodiments of the present description, evaluation unit 206 (which may be one or more CPUs 20 and/or one or more GPUs 30) is configured to evaluate whether the determined match score meets or exceeds a first threshold match score.

As a non-limiting example, the first threshold match score may be a threshold which the determined match score must meet or exceed in order for image processing apparatus 200 to provide an indication that the virtual avatar's appearance is trustworthy (that is, the virtual avatar's appearance can be relied upon as a way of identifying the user). Using the aforementioned nose example, in the event that the match score is based solely on the measurements of the nose lengths of the user and virtual avatar, and the first threshold match score is, say, 80%, evaluation unit 206 would evaluate the determined match score of 92.9% against the first threshold match score of 80% and find that the determined match score exceeds the first threshold match score. Consequently, image processing apparatus 200 may provide the indication that the virtual avatar's appearance is trustworthy.

Conversely, in another example, in the event that evaluation unit 206 evaluates a determined match score of, say, 50% against the first threshold match score of 80% and finds that the determined match score does not meet or exceed the threshold match score, image processing apparatus 200 does not provide the indication that the virtual avatar's appearance is trustworthy. In such case, image processing apparatus 200 may provide an indication that the virtual avatar's appearance is not trustworthy (that is, the virtual avatar's virtual appearance cannot be relied upon as a way of identifying the user). As an alternative to the provision of an indication of untrustworthiness when the determined match score does not meet or exceed the first threshold match score, evaluation unit 206 may be configured to evaluate whether the determined match score meets or exceeds a second threshold match score when the determined match score does not meet or exceed the first threshold match score, the second threshold match score being lower than the first threshold match score.

As a non-limiting example, the second threshold match score may be a threshold which the determined match score must meet or exceed in order for image processing apparatus 200 to provide an indication that the virtual avatar's appearance is somewhat trustworthy (that is, other users should act with caution if they are to use the virtual avatar's appearance as a way of identifying the user, as the virtual avatar does not strongly resemble the user). For example, determining unit 204 determines a match score of, say, 65%, this match score being determined based on one or more aspects of one or more facial features (and/or parts thereof). Subsequently, evaluation unit 206 unit evaluates this determined match score against a first threshold match score of, say, 80% and finds that the determined match score does not meet or exceed the first threshold match score (thus, an indication that the virtual avatar's appearance is trustworthy will not be provided). In this example, evaluation unit 206 may subsequently evaluate the determined match score (65%) against a second threshold match score of, say, 60% (that is, lower than the first threshold match score), and finds that the determined match score exceeds the second threshold match. Consequently, image processing apparatus 200 may provide the indication that the virtual avatar's appearance is somewhat trustworthy.

Conversely, in another example, determining unit 204 determines a match score of, say, 40%. Subsequently, evaluation unit 206 unit evaluates this determined match score against the first threshold match score of 80% and finds that the determined match score does not meet or exceed the first threshold match score. Evaluation unit 206 may subsequently evaluate the determined match score (40%) against a second threshold match score of 60%, and find that the determined match score does not meet or exceed the second threshold match. In this example, image processing apparatus 200 may provide an indication that the virtual avatar's appearance is not trustworthy.

*Virtual Element*

As previously mentioned, in embodiments of the present description, it is desirable to provide other users with an indication as to whether they should rely on the appearance of the first virtual avatar as a way of identifying the user. As will be appreciated by persons skilled in the art, in order for other users to view the indication provided by image processing apparatus 200, means to output the indication for display may be used.

Therefore, in embodiments of the present description, an output unit 208 (which may be one or more A/V ports 90 and/or one or more data ports 60) is configured to output, for display, a virtual element associated with the first virtual avatar that is responsive to whether the determined match score meets or exceeds the first threshold match score.

The virtual element associated with the first virtual avatar may comprise an indication as to whether other users should rely on the appearance of the first virtual avatar as a way of identifying the user (that is, whether the first virtual avatar's appearance is trustworthy). As such, the virtual element may be responsive to the evaluation carried out by evaluation unit 206 (that is, the evaluation as to whether the determined match score meets or exceeds the first threshold match score). This is because the indication as to whether the first virtual avatar's appearance is trustworthy is dependent upon (responsive to) the evaluation carried out by evaluation unit 206.

As a non-limiting example, the virtual element may comprise an indication that the first virtual avatar resembles the user when the determined match score meets or exceeds the first threshold match score. As previously mentioned, such a virtual element (comprising an indication of resemblance) allows others users to ascertain that they can rely on the appearance of the first virtual avatar as a way of identifying the user (the first virtual avatar's appearance is trustworthy). Alternatively or in addition, the virtual element may comprise an indication that the first virtual avatar does not resemble the user when the determined match score does not meet or exceed the first threshold match score. As previously mentioned, such a virtual element (comprising an indication of non-resemblance) allows others users to ascertain that they cannot rely on the appearance of the first virtual avatar as a way of identifying the user (the first virtual avatar's appearance is not trustworthy).

As mentioned previously, evaluation unit 206 may be configured to evaluate whether the determined match score meets or exceeds a second threshold match score when the determined match score does not meet or exceed the first threshold match score, the second threshold match score being lower than the first threshold match score. In this case, the virtual element may be responsive to whether the determined match score meets or exceeds the second threshold match score when the determined match score does not meet or exceed the first threshold match score.

As a non-limiting example, the virtual element may comprise an indication that the first virtual avatar approximately resembles the user when the determined match score meets or exceeds the second threshold match score but does not meet or exceed the first threshold match score. Such a virtual element (comprising an indication of at least some resemblance) allows others users to ascertain that they should act with caution if they are to use the appearance of the first virtual avatar as a way of identifying the user (the first virtual avatar's appearance is somewhat trustworthy). As will be appreciated by persons skilled in the art, such a virtual element (indicating at least some trustworthiness) may be used as an alternative to a virtual element comprising an indication of non-resemblance in the event that the determined match score does not meet or exceed the first threshold match score. Alternatively or in addition, the virtual element may comprise an indication that the first virtual avatar does not resemble the user when the determined match score does not meet or exceed the second threshold match score. Other users can thereby ascertain that the first virtual avatar's appearance is not trustworthy.

In any case, output unit 208 outputs the virtual element for display. As a non-limiting example, output unit 208 may output the virtual element such that it is displayed within the virtual environment in which the first virtual avatar is located. Moreover, output unit 208 may output the virtual element such that it is located proximate to the first virtual avatar. For example, the virtual element may be located above or on the first virtual avatar's head, in front of or on the first virtual avatar's chest, or the like. Furthermore, the appearance of the virtual element (such as the virtual element's shape, size, colour, texture, shading, or the like) may (or may not) vary in dependence upon (responsive to) the evaluation carried out by evaluation unit 206, for example.

As a non-limiting example of the virtual element's appearance varying responsive to the evaluation, in the event that the determined match score meets or exceeds the first threshold match score, output unit 208 may output, for display, a green-coloured tick-shaped virtual element above the first virtual avatar's head, for example, or avatars may include a badge on their clothing that incorporates the virtual element. Alternatively or in addition, in the event that the determined match score does not meet or exceed the first threshold match score, output unit 208 may output, for display, a red-coloured cross-shaped virtual element above the first virtual avatar's head or on such a badge, for example.

As mentioned previously, the virtual element may be responsive to whether the determined match score meets or exceeds the second threshold match score when the determined match score does not meet or exceed the first threshold match score. In such case, in the event the determined match score meets or exceeds the second threshold match score but does not meet or exceed the first threshold match score, output unit 208 may output, for display, an orange-coloured virtual element in the shape of a question mark above the first virtual avatar's head, for example. Alternatively or in addition, in the event that the determined match score does not meet or exceed the first threshold match score, output unit 208 may output, for display, the aforementioned red-coloured cross-shaped virtual element above the first virtual avatar's head, for example.

In such cases, the shape and/or colour of the virtual element may in themselves serve as an indication of the trustworthiness of the first virtual avatar's appearance, for example. For example, the green-coloured tick-shaped virtual element may be an indication that the first virtual avatar resembles the user, the red-coloured cross-shaped virtual element may be an indication that the first virtual avatar does not resemble the user, and the orange-coloured and/or question-mark-shaped virtual element may be an indication that the first virtual avatar approximately resembles the user.

As mentioned previously, the appearance of the virtual element may not vary in dependence upon the evaluation carried out by evaluation unit 206. In such case, other aspects of the virtual element may be responsive to the evaluation. For example, the virtual element may comprise information which is accessible upon interaction with the virtual element, this information being responsive to whether the determined match score meets or exceeds the first threshold match score.

As a non-limiting example, output unit 208 may output the virtual element such that it is displayed within the virtual environment at a location in front of the chest of the first virtual avatar. Other users, wishing to communication with the user, may be able to interact with this virtual element by, say, controlling their respective virtual avatars such that their respective virtual avatar touches, presses, strikes, or otherwise interacts with the virtual element (which is associated with the first virtual avatar). This interaction may result in information being provided to the other users whose respective virtual avatar interacted with the virtual element, this information being dependent upon (responsive to) the evaluation carried out by evaluation unit 206.

For example, the information may read "the match score associated with this virtual avatar meets the first threshold match score", "this virtual avatar's appearance is trustworthy", or "this virtual avatar is a verified avatar", "verified avatar", or the like, in the event that the determined match score meets or exceeds the first threshold match score. Alternatively or in addition, the information may read "the match score associated with this virtual avatar does not meet or exceed the first threshold match score", "this virtual avatar's appearance is not trustworthy", or "this virtual avatar is not a verified avatar", "not a verified avatar", or the like, in the event that the determined match score does not meet or exceed the first threshold match score.

Optionally the information may comprise parametric assessments of the user such as a probability of a given sex of the user based on facial features (and/or information from the user account or documentation used to verify the user's picture), or other aspects such as an estimated age. These may be of benefit to indicate in what way the avatar does not resemble the user, for example if a user takes an otherwise accurate avatar and edits it to look more masculine or feminine, or to look younger, for example.

Optionally, should the virtual element be responsive to whether the determined match score meets or exceeds the second threshold match score when the determined match score does not meet or exceed the first threshold match score, the information may read "the match score associated with this virtual avatar does not meet or exceed the first threshold match score but does meet the second threshold match score", "this virtual avatar's appearance is somewhat trustworthy", or "this virtual avatar may be a verified avatar", "may be a verified avatar", or the like, in the event that the determined match score meets or exceeds the second threshold match score but does not meet or exceed the first threshold match score. Alternatively or in addition, the information may read "the match score associated with this virtual avatar does not meet or exceed the first threshold match score", "this virtual avatar's appearance is not trustworthy", or "this virtual avatar is not a verified avatar", "not a verified avatar", or the like, in the event that the determined match score does not meet or exceed the second threshold match score.

In any case, the virtual element output for display by output unit 208 is responsive to whether the determined match score meets or exceeds the first threshold match score.

### Training the determining unit

As will be appreciated by persons skilled in the art, it is improbable that a given user will edit their virtual avatar such that its appearance is a facsimile of the given user's appearance. This may be because of factors such as human (observation) error, lack of appropriate virtual avatar editing tools, or the like. Even in the event of a photo capture of the user, this may then be applied to an avatar mesh that is not faithful to the shape of the user's head/face, so introducing apparent distortions. Similarly depending on the resolution of the avatar and/or the image capture, aliasing effects may effectively alter the shape or size of facial features. Therefore, the appearances of the virtual avatar and the given user may not typically be identical due to certain discrepancies arising during the creating/editing of the first virtual avatar, which in turn may be due to human error, lack of appropriate editing tools, a capture process, or the like. However, the appearances may be similar enough such that, to the human eye, the virtual avatar still closely resembles the user.

In embodiments of the present description, it may be desirable to evaluate whether the non-identical appearances of a user's face and a virtual avatar's face have arisen due to the aforementioned discrepancies arising during the production of the virtual avatar's appearance, or otherwise evaluate whether the non-identical appearances have arisen due to, say, a user intentionally editing the virtual avatar's appearance such that it does not resemble the user, for example.

Therefore, in embodiments of the present description, determining unit 204 may comprise a determining model trained to generate, based on one or more of the images of the face of the user, one or more images of a candidate face of the first virtual avatar. In such embodiments, determining unit 204 may be configured to determine, based on one or more of the images of the candidate face of the first virtual avatar and one or more of the images of the face of the first virtual avatar, a match score indicating a degree of resemblance between the candidate face of the virtual avatar and the face of the first virtual avatar.

The determining model may be any suitable machine learning method, neural network, artificial intelligence, or the like which may be trained (may learn), using training data, to generate output data. In embodiments of the present description, the training data may comprise one or more datasets, each dataset comprising one or more images of a face of a respective user and one or more images of a face of a respective virtual avatar corresponding to the face of the respective user. In such a case, input unit 202 may be configured to receive the one or more datasets. Preferably, each respective virtual avatar's face has been edited such that, to the human eye, each respective avatar's face resembles its corresponding respective user's face. The determining model may learn, using one or more of the received datasets, to generate one or more images of a candidate face of each respective virtual avatar. An image of a candidate face of a virtual avatar may be an image, wherein at least part of the image comprises the candidate face of the virtual avatar. A candidate face of a virtual avatar may be a prediction as to the appearance of a virtual avatar's face, the prediction being based on one or more of the images of the corresponding user's face. Typically, the candidate face of the virtual avatar is not a facsimile of the corresponding user's face, but rather differs in appearance to the corresponding user's face because of one or more visual discrepancies therebetween, these one or more visual discrepancies being a simulation/representation of the discrepancies that typically arise during the editing of the virtual avatar's face (human error, lack of appropriate editing tools, or the like). As such, a candidate face of a virtual avatar may be a generated face of a virtual avatar, such a face being generated to resemble its corresponding user's face, albeit with one or more visual discrepancies therebetween. Using such training, the machine learning method may learn to predict, from an image of the user, what an 'honest' avatar of the user may then look like.

As a non-limiting example of training the determining the model to generate such candidate faces of virtual avatars, the determining model of determining unit 204 may comprise a generative adversarial network (GAN), which in turn may comprise a generator network and a discriminator network (hereinafter referred to as "generator" and "discriminator", respectively). Input unit 202 may receive a dataset comprising one of more images of a face of a user and one or more images of a face of a virtual avatar. The one or more images of the user's face may be input to the generator of the GAN, which may subsequently generate, based on one or more of the images of the user's face, one or more images of a candidate face of a virtual avatar. The one or more images of the face of the virtual avatar may be input to the discriminator of the GAN, which may subsequently learn that the inputted images comprise "ground truth" data (that is, data which has not been generated by the generator) and thus may classify them as such. The one or more images of the candidate face of the virtual avatar may be subsequently input to the discriminator, which subsequently classifies each candidate virtual avatar face image as being either "ground truth" data or "false" data (that is, data which has been generated by the generator). In the event that the candidate face images are classified as "false" by the discriminator, the discriminator may output difference data indicating the differences between the candidate virtual avatar face images and the "ground truth" virtual avatar face images. This difference data may be input to the generator, which may generate one or more subsequent candidate virtual avatar face images based on the images of the user's face and the inputted difference data. As will be appreciated by persons skilled in the art, the generator may iteratively generate candidate virtual avatar face images until the discriminator classifies the candidate virtual avatar face images (whichever iteration thereof this may be) as "ground truth" data. Once this occurs, another dataset may be used to further train the generator and discriminator to respectively generate and classify images. Once the generator and discriminator have been sufficiently trained, the generator may be used in an operational phase to generate, based on one or more of the images of the face of the user, one or more images of the candidate face of the first virtual avatar.

Determining unit 204 may subsequently determine a match score based on the images of the candidate face of the first virtual avatar and images of the face of the first virtual avatar. This determined match score may indicate the degree of resemblance between a predicted face of the first virtual avatar (which ideally comprises one or more visual discrepancies between it and the face of the user, as previously described) and the actual face of the first virtual avatar. Evaluation unit 206 may be configured to evaluate whether this determined match score exceeds the first threshold match score, and thereby determine whether the first virtual avatar's face differs from the user's face due to certain aforementioned discrepancies (caused by, say, human error) arising during the editing of the virtual avatar's appearance.

As a non-limiting example of using the trained determining model in an operational phase, an image of the user's face and an image of the first virtual avatar are input to images processing apparatus via input unit 202. Subsequently, the trained determining model of determining unit 204 (which may or may not be the aforementioned generator) generates an image of a candidate face of the first virtual avatar. Determining unit 204 determines a match score based on the image of the candidate first virtual avatar face and the image of the first virtual avatar's face, this match score being, say, 95%, for example. Evaluation unit 206 evaluates this determined match score against a first threshold match score of say, 80%, and finds that the determined match score exceeds the first threshold match score. Such an evaluation may therefore signify that the appearance of the first virtual avatar's face differs from that of the user's face to the extent that such differences (discrepancies) have arisen during the editing of the first virtual avatar's appearance due to human error, lack of appropriate editing tools, or the like, rather than through any intention to edit the virtual avatar's appearance such that it does not resemble the user, for example. The image of the candidate first virtual avatar face may therefore serve as a benchmark image used to ascertain the extent to which the appearance of the first virtual avatar differs from that of the user due to, say, human error during editing, as it is a prototypical depiction of such differences (discrepancies).

Subsequently, output unit 208 may be configured to output, for display, a virtual element associated with the first virtual avatar that is responsive to whether the match score (determined based on one or more of the images of the candidate face of the first virtual avatar and one or more of the images of the face of the first virtual avatar) meets or exceeds the first threshold match score.

Optionally, where a plurality of candidate face images are generated, the candidate with the highest match may be chosen to replace the first virtual avatar - or a shortlist of the N highest matching candidates may be presented to the user, to allow them to select the replacement. Preferably in this case the candidate(s) for replacing the first virtual avatar meet or exceed the first threshold match score, but this is not essential if the process is iterative (and/or if the user does not mind having an avatar that can trigger a non-match warning).

Optionally such a machine learning system can be used to initially generate a face for the first virtual avatar as part of an avatar generation process, and not just to evaluate an existing avatar face and/or provide a replacement.

Notably if the machine learning system has been trained on example real and avatar faces, where the training set avatar faces have a consistent art style, or map to a consistent other form (for example where all user avatars are cat people), then the machine learning system can generate a new avatar that embodies the intended art style or other form for the user (for example preserving relative features within the new facial structure, so that a wide human mouth becomes a wide cat mouth, and/or a masculine human face becomes a masculine cat face, etc).

*Modifying the first virtual avatar*

In embodiments of the present description, it may be beneficial to help users who may find it difficult to edit the appearance of their respective virtual avatars such that it resembles their own appearance, or otherwise ensure that users are not intentionally creating virtual avatars whose appearances do not resemble their own appearances.

Accordingly, turning now to figure 3, in which parts 302, 304, 306 and 310 correspond, respectively, to parts 202, 204, 206 and 208 of figure 2 except where stated otherwise, in embodiments of the present description, image processing apparatus 300 may comprise modification unit 308 (which may be one or more CPUs 20 and/or one or more GPUs 30) configured to modify at least the face of the first virtual avatar when the determined match score does not meet or exceed the first threshold match score; and generate one or more images of the modified face of the first virtual avatar. In such embodiments, determining unit 204, 304 may be configured to determine, based on the one or more images of the face of the user and the one or more images of the modified face of the first virtual avatar, a subsequent match score indicating a degree of resemblance between the face of the user and the face of the modified first virtual avatar.

As a non-limiting example, in the event that evaluation unit 206, 306 finds that the determined match score does not meet or exceed the first threshold match score, modification unit 308 may subsequently modify the face of the virtual avatar by, say, modifying one or more facial features (or parts thereof), or modifying one or more inter-feature relationships, for example. Subsequently, determining unit 204, 304 determines a subsequent match score based on one or more images of the user's face and one or more images of the virtual avatar's modified face. Evaluation 206, 306 may be configured to evaluate whether the subsequent match score meets or exceeds the first threshold match score. In the event that evaluation unit 206, 306 finds that the subsequent match score does not meet or exceed the first threshold match, modification unit 308 may again modify the face of the virtual avatar. As will be appreciated by persons skilled in the art, modification unit 308 may therefore iteratively modify at least the face of the virtual avatar until evaluation unit 206, 306 finds that the subsequent match score (whichever iteration thereof this may be) meets or exceeds the first threshold match. Subsequently, output unit 208, 310 may be configured to output, for display, the virtual element associated with the first virtual avatar when the subsequent match score (whichever iteration thereof this may be) meets or exceeds the first threshold match score.

In some embodiments (where determining unit 204, 304 may comprise a determining model trained to generate, based on one or more of the images of the face of the user, one or more images of a candidate face of the first virtual avatar, and may be configured to determine a match score based on one or more of the images of the candidate face of the first virtual avatar and one or more of the images of the face of the first virtual avatar), then as noted elsewhere herein modification unit 308 may be configured to modify at least the face of the first virtual avatar such that the face thereof resembles the candidate face of the first virtual avatar when the determined match score does not meet or exceed the first threshold match score. Such embodiments may result in a more efficient virtual avatar modification, as the number of modifications required in order to ensure that the first virtual avatar resembles the user may be reduced (as mentioned previously, the candidate face of the first virtual avatar resembles the face of the user, albeit with one or more visual discrepancies therebetween).

*Types of user face images*

As mentioned previously, the one or more images of the face of the user may comprise several different types of images. For example, the one or more images of the face of the user may comprise one or more images, wherein at least part of each image comprises the face of the user, the other part other part comprising, say, a background of, colours, objects, people, animals, plants, buildings, or the like, for example. As will be appreciated by persons skilled in the art, such images may or may not depict the face of the user editing the appearance of their virtual avatar. For example, a malicious user may use one or more images of the face of another person, such as the user's friend, a celebrity, a well-known video game streamer, or the like, and subsequently edit the appearance of their virtual avatar such that there is high degree of resemblance between the face of the other person and the face of the virtual avatar (resulting in the determined match score exceeding the first threshold match score, for example). Accordingly, output unit 208, 310 may output a virtual element comprising an indication that the virtual avatar's appearance is trustworthy, when in actuality it is not (a so-called "false positive" result). Thus, in embodiments of the present description, it may be desirable to ensure that the user's face (as opposed to another person's face) is, in fact, depicted within the one or more images of the face of the user, thereby ensuring that the match score is determined based on the user's face and not another person's face.

Accordingly in an embodiment of the description, the one or more images of the face of the user may comprise one or more images of an identity document of the user, wherein at least part of the identity document comprises an image of the face of the user. As previously mentioned, examples of such an identity document include a passport, a driving licence, a national identity card, or the like. In such case, the one or more images of the identity document may comprise information which may be used to validate the identity of the user. This is because the identity document may comprise information about the user (whose face is depicted on the identity document), such as the user's name, date of birth, country of birth, country of residence, nationality, or the like. As will be appreciated by persons skilled in the art, such information is sensitive and should therefore be protected as such in the event that images of an identity document are received by image processing apparatus 200, 300 via input unit 202, 302. For example, such information should not be permanently stored in a memory (such as RAM 40 or SSD 50), which could be subject to, say, a cyberattack.

Given that determining unit 204, 304 is configured to determine a match score indicating the resemblance between the user's face and first virtual face, such sensitive information (which is typically textual information) may not be utilised by determining unit 204, 304. This is especially apparent in the case where determining unit 204, 304 utilises facial feature detection algorithms in order to determine such resemblance, as such algorithms typically detect facial features within an image, not textual information. In such case, the most significant threat to data protection is that associated with permanently storing the images of the identity document within the memory of image processing apparatus 200, 300. Therefore, in order to ensure that any sensitive information is not permanently stored within information processing apparatus 200, 300, once determining unit 204, 304 determines a match score based on images of the identity document of the user and images of the first virtual avatar, the images of the identity document (and any sensitive information depicted therein) may be subsequently deleted from image processing apparatus 200, 300.

As mentioned previously, in embodiments of the present description, it may be desirable to ensure that the user's face is, in fact, depicted within the one or more images of the face of the user. Thus, it may be desirable to utilise at least some of the textual information within the identity document in order to validate the identity of the user before images of the user's face (within the identity document) are used to determine a match score.

Accordingly, turning now to figure 4, in which parts 402, 410, 412 and 414 correspond, respectively, to parts 302, 304, 306 and 310 of figure 3 and parts 202, 204, 206 and 208 of figure 2 except where stated otherwise, in embodiments of the present description (wherein the one or more images of the face of the user may comprise one or more images of an identity document of the user), image processing apparatus 400 may comprise recognition unit 404 configured to recognise at least some textual information depicted within the one or more images of the identity document of the user; validation unit 406 configured to validate at least some of the recognised textual information depicted within the one or more images of the identity document of the user; and extraction unit 408 configured to extract only the respective image of the face of the user from the one or more images of the identity document of the user once the at least some of the recognised textual information has been validated, the extracted images of the face of the user being input to determining unit 410.

Recognition unit 404 (which may be one or more CPUs 20 and/or one or more GPUs 30) may be configured (for example, using suitable software instruction) to detect one or more alpha-numeric characters using one or more alpha-numeric character detection algorithms (or components thereof) as required. For example, recognition unit 404 may be configured to detect one or more alpha-numeric characters (recognise at least some textual information) depicted within the one or more images of the identity document of the user. The term "alpha-numeric character detection algorithm" refers to any suitable computer-implemented method, software, algorithm, or the like, which causes a computer (such as image processing apparatus 300) to detect alpha-numeric characters from images comprising textual information. Such alpha-numeric character detection algorithms are well-known in the art. Examples of such algorithms include optical character recognition, optical word recognition, intelligent character recognition, intelligent word recognition, or the like.

Validation unit 406 (which may be one or more CPUs 20 and/or one or more GPUs 30) may be configured to validate at least some of the recognised textual information, that is, determine whether the at least some of the recognised textual information is associated with image processing apparatus 200, 300, 400. As such, validation unit 406 may be configured to evaluate whether at least some of the recognised textual information (one or more of the detected alpha-numeric characters) corresponds to one or more user accounts associated with image processing apparatus 200, 300, 400. Examples of user accounts include social media profiles, video game console user profiles (player profiles), computer user profiles, email accounts, or the like. As a non-limiting example of such user accounts being associated with image processing apparatus 200, 300, 400, input unit 202, 302, 402 may be configured to receive information pertaining to one or more user accounts. Accordingly, image processing apparatus 200, 300, 400 may store the received information pertaining to one or more user accounts within a memory of image processing apparatus 200, 300, 400 (such as RAM 40 or SSD 50). Therefore, validation unit 406 may be configured to evaluate whether at least some of the recognised textual information corresponds to at least some information pertaining to one or more user accounts, wherein input unit 202, 302, 402 is configured to receive the information pertaining to one or more user accounts.

Optionally, in embodiments of the present description, validation unit 406 may be configured to evaluate whether at least some of the recognised textual information corresponds to a valid identity document. In such embodiments, validation unit 406 may ensure that a "false positive" cannot be obtained from image processing apparatus 200, 300, 400 through the use of images of any counterfeit and/or wrong users' identity documents. As such, validation unit 406 may be configured to evaluate whether at least some of the recognised textual information (one or more of the detected alpha-numeric characters) corresponds to at least some information pertaining to one or more identity documents stored in one or more databases. Such a database (comprising information pertaining to one or more identity documents) is typically government-owned, and may comprise information pertaining to all valid identity documents of a given type. For example, the UK Government's Driver and Vehicle Licensing Agency (DVLA) database comprises information pertaining to millions of UK driving licences.

Once the recognised textual information has been validated by validation unit 408 (that is, if the at some recognised textual information corresponds to at least some information pertaining to one or more user accounts associated with image processing apparatus 200, 300, 400), extraction unit 408 may be configured to extract only the respective image of the user's face from the one or more images of the user's identity document, and input the extracted images to determining unit 204, 304, 410. As mentioned previously, the textual information within the identity document is sensitive. Therefore, by extracting only the image of the user's face from the images of the identity document, the risk of such sensitive information being compromised is reduced, as no textual information is being utilised in the subsequent determination of the match score. Furthermore, the part of the image of the user's identity document comprising the textual information may be deleted from image processing apparatus 200, 300, 400 after the image of the user's face has been extracted therefrom.

As a non-limiting example, an image of a user's driving licence may be received by input unit 202, 302, 402. Subsequently, recognition unit 404 recognises at least some textual information depicted within the image of the user's driving licence (detects one or more of the alpha-numeric characters depicted therein) by using, say, optical character recognition, for example. Subsequently, validation unit 406 validates at least some of the recognised textual information (which may, for example, correspond to a name such as "Desrie Birch"). To do this, validation unit 406 may evaluate whether the least some of the recognised textual information ("Desrie Birch") corresponds to one or more user accounts associated with image processing apparatus 200, 300, 400 by, say, evaluating whether the least some of the recognised textual information corresponds to at least some of the information pertaining to one or more user accounts received via input 202, 302, 402, for example. Validation unit 406 may subsequently find that "Desrie Birch" corresponds to a social media account associated with image processing apparatus 200, 300, 400. Subsequently, extraction unit 408 may extract the image of the user's face from the image of the driving licence, and input the extracted image to determining unit 204, 304, 410.

Optionally, validation unit 406 may evaluate whether the at least some of the recognised textual information corresponds to at least some information pertaining to one or more identity documents stored in one or more databases. For example, validation unit 406 may use the at least some recognised information to perform a query of the DVLA database. Validation unit 406 may subsequently find that "Desrie Birch" corresponds to information pertaining to a driving licence stored within the DVLA database, thereby signifying that the driving licence depicted in the image thereof is valid.

Hence some or all of the functionality of the recognition unit, validation unit, and/or extraction unit may be shared between the image processing apparatus and one or more servers. Typically image analysis to extract data for verification is carried out local to the image processing apparatus, and the extracted data is sent to a relevant server for validation, typically after being encrypted. Once the validity of the document has been confirmed, the image of the face on the document is extracted, and then the image of the remainder of the document is discarded so as to maintain security for the user. In the event that image processing is carried out at a server then the image may be encrypted first before being sent. Optionally in this case the image of the document may be sent with the image of the face removed or overwritten, so that a complete version of the document is never transmitted from the image processing apparatus.

Alternatively or in addition, the one or more images of the user's face may comprise one or more live images of the face of the user. A live image may be an image which has been captured in real time (or least substantially in real time), "in real time" meaning that the image is transmitted, displayed, processed or otherwise utilised immediately after being captured (or least substantially immediately, as there may be a delay in the utilisation of the image after being captured). As will be appreciated by persons skilled in the art, the one or more live images may or may not comprise one or more images of an identity document of a user. Consequently, the one or more live images of the face of the user may be received by image processing apparatus 200, 300, 400 via input unit 202, 302, 402. The one or more live images may be received from one or more cameras coupled to one or more of: a head-mounted display, a mobile phone,

a portable video game console, and a computer.

Due to their real-time nature, live images of the user's face may help to ensure that it is the user's face (as opposed to another person's face) being depicted within the images of the user's face. As a non-limiting example, one or more of the live images of the user's face may be captured and subsequently received by input unit 202, 302, 402 while the user is editing the appearance of their virtual avatar, each of the live images being immediately transmitted (or at least substantially so) to input unit 202, 302, 402 after being captured. Once the user has finished the editing their virtual avatar's appearance, determining unit 204, 304, 410 may subsequently determine a match score based on the one or more live images of the user's face and the one or more images of the virtual avatar's face. In this case, the match score is based on the images of the face of the user editing the appearance of the virtual avatar as opposed to another person.

In embodiments of the present description, it may be desirable to continually ensure that the face of the user controlling the virtual avatar within the virtual environment is (at least approximately) identical to that used to determine the match score. As a non-limiting example, a malicious user may have let another person edit the appearance of the virtual avatar such that it resembles the other person, live images of the other person being captured while the other person edited the virtual avatar's appearance. Once image processing apparatus 200, 300, 400 outputs the virtual element (indicating the virtual avatar's trustworthiness, for example) via output unit 208, 310, 414, the malicious user (who does not resemble the virtual avatar) may subsequently control the virtual avatar within the video game's virtual environment and attempt to defraud other users of the video game, for example.

Therefore, in embodiments of the present description (wherein the one or more images of the face of the user comprises one or more live images of the face of the user), determining unit 204, 304, 410 may be configured to determine, based on the live images of the face of the user and the one or more images of the face of the first virtual avatar, an updated match score, an updated match score being determined after a threshold period of time has elapsed.

As a non-limiting example, while the user is controlling their virtual avatar within the video game's virtual environment (playing the video game), one or more live images of live images of the user's face may be captured and subsequently received by input unit 202, 302, 402 after a threshold period of time, such as, say, 0.01 seconds, 0.2 seconds, 0.5 seconds, 1 second, 2 seconds, 5 seconds, 10 seconds, 20 seconds, 30 seconds, 50 seconds, 1 minute, 2 minutes, 5 minutes, 10 minutes, 30 minutes, 50 minutes, 1 hour, or the like, has elapsed.

Equivalently the time may be deemed to have elapsed in response to an event, such as pausing the game, putting the controller down (e.g. detection of a complete lack of movement), or in the case of a head mounted display, detecting that the display is removed, and/or put on. Any of these actions may be indicative of swapping players during a game, at which point an avatar that was previously representative of a first player may no longer be representative of the next player.

In any event, determining unit 204, 304, 410 subsequently determines an updated match score based on these live images captured during gameplay. Evaluation unit 206, 306, 412 may be configured to evaluate whether the updated match score meets or exceeds the first threshold match score. Alternatively or in addition, evaluation unit 206, 306, 412 may be configured to evaluate whether the value of the difference between the determined match score and the updated match score lies within a predetermined range of values. Output unit 208, 310, 414 may be configured to output, for display, a virtual element associated with the first virtual avatar that is responsive to whether the updated match score meets or exceeds the first threshold match score. Alternatively or in addition, output unit 208, 310, 414 may be configured to output, for display, a virtual element associated with the first virtual avatar that is responsive to whether the value of the difference between the determined match score and the updated match score lies within a predetermined range of values. In any case, the updated match score may be used to reconfirm whether that the face of the user controlling the virtual avatar (that is, playing the video game) is (at least approximately) representative of the face of the user on which the determined match score is based.

*Toggling the display of the virtual element*

In embodiments of the present description, it may be desirable to toggle the display of the virtual element within the virtual environment of the video game. This may be because the virtual element may, for example, obstruct one or more users' viewpoint of the virtual environment if the virtual element were to be permanently displayed. This is especially apparent in the case where many virtual avatars are present within a shared virtual environment, each having an associated virtual element being displayed proximate to them. Moreover, in such case, the number of virtual elements to be rendered may even cause certain issues within the video game. Examples of such issues include input lag (a delay between a user providing an input signal to the video game and the virtual avatar performing the action corresponding to the input signal), rubber-banding (when attempting to navigate the virtual environment, the virtual avatar initially moves in a certain direction but then suddenly returns to their original position), graphics being rendered at a lower resolution, or the like.

Therefore, in embodiments of the present description, output unit 208, 310, 414 may be configured to output, for display, the virtual element associated with the first virtual avatar in dependence upon one or more of: a user input from an input device, the input unit being configured to receive the user input; a second virtual avatar being located within a threshold distance from the first virtual avatar; a virtual object being located within a threshold distance from the first virtual avatar; an action performed by a second virtual avatar; and an action performed by a virtual object.

Thus, in such embodiments, the virtual element is not permanently displayed, but rather only displayed in certain circumstances, thereby reducing the amount of virtual elements being displayed at once (and thus reducing visual clutter within the virtual environment and any game performance/rendering issues). For example, the user controlling the virtual avatar may provide a user input to input unit 202, 302, 402 via an input device, such as a mouse, keyboard, video game controller, camera, microphone, or the like. When provided, this user input subsequently may cause output unit 208, 310, 414 to output (or to stop outputting) the virtual element for display, for example. Alternatively or in addition, should a second user wish to interact with a first user, the second user's virtual avatar (the second virtual avatar) may be controlled by the second user such that the second virtual avatar moves to a location within the virtual environment that is within a threshold distance away from the first virtual avatar. When this occurs, output unit 208, 310, 414 may output the virtual element for display so that the second user can ascertain whether the first virtual avatar's appearance is trustworthy. Alternatively or in addition, the second user may control the second virtual avatar in such a way that it performs an action which may cause output unit 208, 310, 414 to output the virtual element for display, such actions being, say, jumping, crouching, lying prone, striking, firing or swinging a virtual weapon, sending a message/friend request/invitation to the first virtual avatar, or the like. Alternatively or in addition, a virtual object (such as a "non-player character" typically controlled by an artificial intelligence) may cause output unit 208, 310, 414 to output the virtual element for display via similar ways to those described previously regarding a second virtual avatar.

*Image processing method*

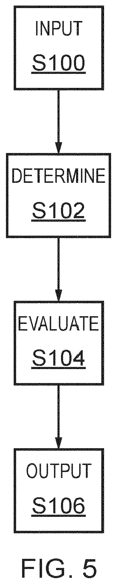

Turning now to figure 5, an image processing method comprises the following steps:

Step S100: receiving one or more images of a face of a user and one or more images of a face of a first virtual avatar, as described elsewhere herein.

Step S102: determining, based on one or more of the images of the face of the user and one or more of the images of the face of the first virtual avatar, a match score indicating a degree of resemblance between the face of the user and the face of the first virtual avatar, as described elsewhere herein.

Step S104: evaluating whether the determined match score meets or exceeds a first threshold match score, as described elsewhere herein.

Step S106: outputting a virtual element associated with the first virtual avatar that is responsive to whether the determined match score meets or exceeds the first threshold match score, as described elsewhere herein.

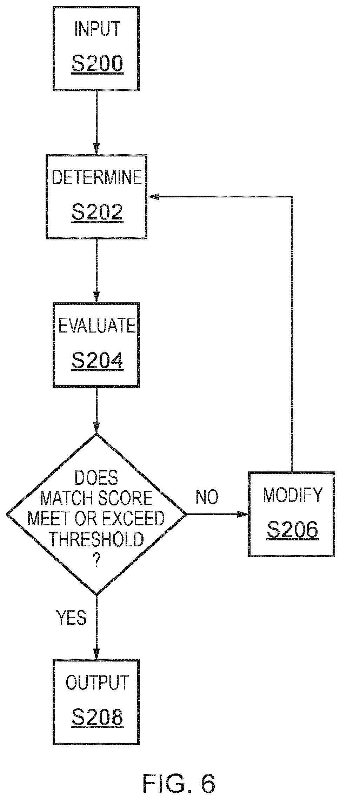

Turning now to figure 6, in which steps S200, S202, S204 and S108 correspond, respectively, to steps S100, S102, S104 and S106 of figure 5 except where stated otherwise, the image processing method may similarly comprise the following additional step:
Step S206: modifying at least the face of the first virtual avatar when the determined match score does not meet or exceed the first threshold match score, and generating one or more images of the modified face of the first virtual avatar, wherein the determining step comprises determining, based on one or more of the images of the face of the user and the one or more of the images of the modified face of the first virtual avatar, a subsequent match score indicating a degree of resemblance between the face of the user and the modified face of the first virtual avatar, as described elsewhere herein.

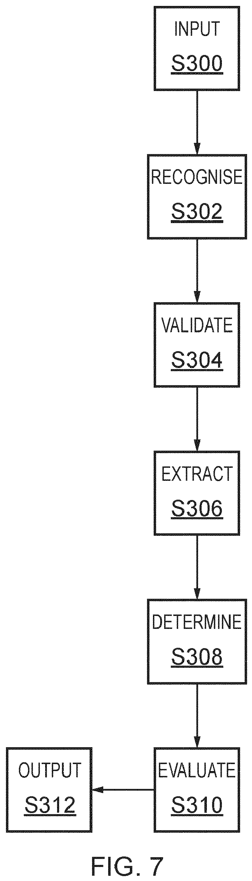

Turning now to figure 7, in which steps S300, S308, S310 and S312 correspond, respectively, to steps S200, S202, S204 and S108 of figure 6 and steps S100, S102, S104 and S106 of figure 5 except where stated otherwise, in the event that one or more images of the face of the user comprises one or more images of an identity document of the user, the image processing method may similarly comprise one or more of the following additional steps:

Step S302: recognising at least some textual information depicted within the one or more images of the identity document of the user, as described elsewhere herein.

Step S304: validating the recognised textual information depicted within the one or more images of the identity document of the user, as described elsewhere herein.

Step 306: extracting only the respective image of the face of the user from the one or more images of the identity document of the user once the recognised textual information has been validated, the extracted images of the face of the user being used in the determining step, as described elsewhere herein.

Moreover, the information processing method may be adapted in the following ways:

Step S106, S208, S312: the virtual element may comprise an indication that the first virtual avatar resembles the user when the determined match score meets or exceeds the first threshold match score. Alternatively or in addition, the virtual element may comprise an indication that the first virtual avatar does not resemble the user when the determined match score does not meet or exceed the first threshold match score.

Step S104, S204, S310: may comprise evaluating whether the determined match score meets or exceeds a second threshold match score when the determined match score does not meet or exceed the first threshold match score, the second threshold match score being lower than the first threshold match score, the virtual element being responsive to whether the determined match score meets or exceeds the second threshold match score when the determined match score does not meet or exceed the first threshold match score. Optionally, the virtual element may comprise an indication that the first virtual avatar approximately resembles the user when the determined match score meets or exceeds the second threshold match score but does not meet or exceed the first threshold match score. Alternatively or in addition, wherein the virtual element may comprise an indication that the first virtual avatar does not resemble the user when the determined match score does not meet or exceed the second threshold match score.

Step 102, S202, S308: may comprise generating, based on one or more of the images of the face of the user, one or more images of an candidate face of the first virtual avatar, and determining, based on one or more of the images of the candidate face of the first virtual avatar and one or more of the images of the face of the first virtual avatar, a match score indicating a degree of resemblance between the candidate face of the virtual avatar and the face of the first virtual avatar.

Step S100, S200, S300: the one or more images of the face of the user may comprise one or more live images of the face of the user, wherein the one or more live images are received from one or more cameras coupled to one or more of: a head-mounted display; a mobile phone; a portable video game console; and a computer. Optionally, step S102, S202, S308 may comprise determining, based on one or more of the live images of the face of the user and one or more of the images of the face of the first virtual avatar, an updated match score, the updated match score being determined after a threshold period of time has elapsed.

Step S106, S208, S312: may comprise outputting, for display, the virtual element associated with the first virtual avatar in dependence upon one or more of: a user input from an input device, the receiving step comprising receiving the user input; a second virtual avatar being located within a threshold distance from the first virtual avatar; a virtual object being located within a threshold distance from the first virtual avatar; an action performed by a second virtual avatar; and an action performed by a virtual object.

It will be apparent to persons skilled in the art that variations in the above method corresponding to operation of the various embodiments of the apparatus as described and claimed herein are considered within the scope of the present invention.

It will be appreciated that the above methods may be carried out on conventional hardware (such as entertainment device 10) suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The foregoing discussion discloses and describes merely exemplary embodiments of the present invention. As will be understood by persons skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An image processing apparatus, comprising:

   an input unit configured to receive one or more images of a face of a user and one or more images of a face of a first virtual avatar;
   a determining unit configured to determine, based on one or more of the images of the face of the user and one or more of the images of the face of the first virtual avatar, a match score indicating a degree of resemblance between the face of the user and the face of the first virtual avatar;

an evaluation unit configured to evaluate whether the determined match score meets or exceeds a first threshold match score; and

an output unit configured to output, for display, a virtual element associated with the first virtual avatar that is responsive to whether the determined match score meets or exceeds the first threshold match score.

2. An image processing apparatus according to claim 1, wherein the virtual element comprises an indication that the first virtual avatar resembles the user when the determined match score meets or exceeds the first threshold match score.

3. An image processing apparatus according to claim 1 or claim 2, wherein the virtual element comprises an indication that the first virtual avatar does not resemble the user when the determined match score does not meet or exceed the first threshold match score.

4. An image processing apparatus according to claim 1 or claim 2, wherein:

the evaluation unit is configured to evaluate whether the determined match score meets or exceeds a second threshold match score when the determined match score does not meet or exceed the first threshold match score, the second threshold match score being lower than the first threshold match score; and

the virtual element is responsive to whether the determined match score meets or exceeds the second threshold match score when the determined match score does not meet or exceed the first threshold match score.

5. An image processing apparatus according to claim 4, wherein the virtual element comprises an indication that the first virtual avatar approximately resembles the user when the determined match score meets or exceeds the second threshold match score but does not meet or exceed the first threshold match score.

6. An image processing apparatus according to claim 4 or claim 5, wherein the virtual element comprises an indication that the first virtual avatar does not resemble the user when the determined match score does not meet or exceed the second threshold match score.

7. An image processing apparatus according to any preceding claim, wherein the determining unit comprises a determining model trained to generate, based on one or more of the images of the face of the user, one or more images of a candidate face of the first virtual avatar, wherein the determining unit is configured to determine, based on one or more of the images of the candidate face of the first virtual avatar and one or more of the images of the face of the first virtual avatar, a match score indicating a degree of resemblance between the candidate face of the virtual avatar and the face of the first virtual avatar.

8. An image processing apparatus according to any preceding claim, comprising a modification unit configured to:

modify at least the face of the first virtual avatar when the determined match score does not meet or exceed the first threshold match score; and

generate one or more images of the modified face of the first virtual avatar, wherein the determining unit is configured to determine, based on one or more of the images of the face of the user and one or more of the images of the modified face of the first virtual avatar, a subsequent match score indicating a degree of resemblance between the face of the user and the modified face of the first virtual avatar.

9. An image processing apparatus according to any preceding claim, wherein the one or more images of the face of the user comprises one or more images of an identity document of the user, wherein at least part of the identity document comprises an image of the face of the user.

10. An image processing apparatus according to claim 9, comprising:

a recognition unit configured to recognise at least some textual information depicted within the one or more images of the identity document of the user;

a validation unit configured to validate at least some of the recognised textual information depicted within the one or more images of the identity document of the user; and

an extraction unit configured to extract only the respective image of the face of the user from the one or more images of the identity document of the user once the at least some of the recognised textual information has been validated, the extracted images of the face of the user being input to the determining unit.

11. An image processing apparatus according to any preceding claim, wherein the one or more images of the face of the user comprises one or more live images of the face of the user, wherein the one or more live images are received from one or more cameras coupled to one or more selected from the list consisting of:

> i. a head-mounted display;
> ii. a mobile phone;
> iii. a portable video game console; and
> iv. a computer.

12. An image processing apparatus according to claim 11, wherein the determining unit is configured to determine, based on one or more of the live images of the face of the user and one or more of the images of the face of the first virtual avatar, an updated match score, the updated match score being determined after a threshold period of time has elapsed.

13. An image processing apparatus according to any preceding claim, wherein the output unit is configured to output, for display, the virtual element associated with the first virtual avatar in dependence upon one or more selected from the list consisting of:

> i. a user input from an input device, the input unit being configured to receive the user input;
> ii. a second virtual avatar being located within a threshold distance from the first virtual avatar;
> iii. a virtual object being located within a threshold distance from the first virtual avatar;
> iv. an action performed by a second virtual avatar; and
> v. an action performed by a virtual object.

14. An image processing method, comprising:

> receiving one or more images of a face of a user and one or more images of a face of a first virtual avatar;
> determining, based on one or more of the images of the face of the user and one or more of the images of the face of the first virtual avatar, a match score indicating a degree of resemblance between the face of the user and the face of the first virtual avatar;
> evaluating whether the determined match score meets or exceeds a first threshold match score; and
> outputting a virtual element associated with the first virtual avatar that is responsive to whether the determined match score meets or exceeds the first threshold match score.

15. A computer program comprising computer executable instructions adapted to cause a computer system to perform the method of claim 14.

FIG. 1

EP 4 265 308 A1

200

| INPUT UNIT 202 | DETERMINING UNIT 204 | EVALUATION UNIT 206 | OUTPUT UNIT 208 |

FIG. 2

300

| INPUT UNIT 302 | DETERMINING UNIT 304 | EVALUATION UNIT 306 | MODIFICATION UNIT 308 | OUTPUT UNIT 310 |

FIG. 3

400

| INPUT UNIT 402 | RECOGNITION UNIT 404 | VALIDATION UNIT 406 | EXTRACTION UNIT 408 | DETERMINING UNIT 410 | EVALUATION UNIT 412 |

OUTPUT UNIT 414

FIG. 4

INPUT

S100

DETERMINE

S102

EVALUATE

S104

OUTPUT

S106

FIG. 5

```
        ┌──────────┐
        │  INPUT   │
        │  S200    │
        └────┬─────┘
             │
             ▼
        ┌──────────┐
        │ DETERMINE│◄──────────────┐
        │  S202    │               │
        └────┬─────┘               │
             │                     │
             ▼                     │
        ┌──────────┐               │
        │ EVALUATE │               │
        │  S204    │               │
        └────┬─────┘               │
             │                     │
             ▼                     │
          ╱──────╲                 │
        ╱  DOES    ╲      NO   ┌──────────┐
       ╱ MATCH SCORE ╲────────►│  MODIFY  │
       ╲ MEET OR EXCEED╱       │  S206    │
        ╲ THRESHOLD  ╱         └──────────┘
          ╲  ?   ╱
           ╲────╱
             │ YES
             ▼
        ┌──────────┐
        │  OUTPUT  │
        │  S208    │
        └──────────┘
```

FIG. 6

22

INPUT
S300

RECOGNISE
S302

VALIDATE
S304

EXTRACT
S306

DETERMINE
S308

OUTPUT
S312

EVALUATE
S310

FIG. 7

Europäisches
Patentamt

European
Patent Office

Office européen
des brevets

# EUROPEAN SEARCH REPORT

Application Number

EP 23 16 3490

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/113814 A1 (HOWARD KAREN [US]) 9 May 2013 (2013-05-09) | 1,2,8-15 | INV. A63F13/71 A63F13/213 A63F13/655 G06V40/16 |
| Y | * paragraph [0029] * * paragraphs [0028], [0040] - [0043], [0055]; figure 15 * * paragraphs [0029], [0048], [0058], [0059], [0060]; figures 12,18 * ----- | 7,8 | |
| Y | US 2020/351228 A1 (DOBROGOST MICHAL [CA] ET AL) 5 November 2020 (2020-11-05) * paragraphs [0082] - [0086], [0131] - [0139]; figures 9-12 * ----- | 7,8 | |
| A | US 2016/361653 A1 (ZHANG LIDAN [CN] ET AL) 15 December 2016 (2016-12-15) * paragraphs [0016], [0017], [0022] - [0024], [0036], [0044], [0046], [0049] - [0057]; figures 4,7A,7B,7C,8 * ----- | 1-15 | |

TECHNICAL FIELDS
SEARCHED      (IPC)

A63F
G06V

The present search report has been drawn up for all claims

| Place of search | Date of completion of the search | Examiner |
|---|---|---|
| Munich | 18 August 2023 | Ruf, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 3490

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2023

| Patent document cited in search report | | Publication date | Patent family member(s) | | Publication date |
|---|---|---|---|---|---|
| US 2013113814 | A1 | 09-05-2013 | US | 2013113814 A1 | 09-05-2013 |
| | | | WO | 2013067244 A1 | 10-05-2013 |
| US 2020351228 | A1 | 05-11-2020 | US | 2020351228 A1 | 05-11-2020 |
| | | | US | 2021168108 A1 | 03-06-2021 |
| US 2016361653 | A1 | 15-12-2016 | CN | 107077750 A | 18-08-2017 |
| | | | EP | 3238176 A1 | 01-11-2017 |
| | | | JP | 6662876 B2 | 11-03-2020 |
| | | | JP | 2018505462 A | 22-02-2018 |
| | | | KR | 20170095817 A | 23-08-2017 |
| | | | US | 2016361653 A1 | 15-12-2016 |
| | | | WO | 2016090605 A1 | 16-06-2016 |

EPO FORM P0459

For more details about this annex : see Official Journal of the European Patent Office, No. 12/82